# EUROPEAN PATENT APPLICATION

(11) **EP 2 023 548 A1**
(43) Date of publication of application: **11.02.2009**
(21) Application number: 07015718.5
(22) Date of filing: 09.08.2007
(51) Int. Cl.: H04L 12/56

(54) **Mobile communication terminal, communication station, communication network, and communication method**

(71) Applicant: Nokia Siemens Networks Oy, 02610 Espoo (FI)
(72) Inventor: Markus WIMMER, 55-093 Kielczów (PL)
(74) Representative: Bruglachner, Thomas E.

(57) **Abstract**

A mobile communication terminal (102) adapted to be communicatively coupled to a communication station (101) of a communication network (100), the mobile communication terminal (102) comprising a station communication unit (108) adapted for exchanging communication messages with the communication station (101), an inspection unit (109) adapted for inspecting whether a predetermined threshold condition indicative of a communication parameter is fulfilled for a present communication link between the mobile communication terminal (102) and the communication station (101), and a communication message generation unit (110) adapted for generating a communication message for transmission to the communication station (101) by the station communication unit (108), wherein the generated communication message is indicative of a desired communication mode for a subsequent communication between the mobile communication terminal (102) and the communication station (101), which communication mode is selected in accordance with a result of the inspection.

## Description

### Field of invention

The present invention relates to the field of mobile communication terminals. Furthermore, the invention relates to communication stations. Moreover, the invention relates to communication networks. Beyond this, the invention relates to communication methods.

### Art Background

Universal Mobile Telecommunications System (UMTS) is one of the third-generation (3G) mobile phone technologies. UMTS is a broadband, packet-based transmission of text, digitized voice, video, and multimedia at high data rates, offering a set of services to mobile computer and phone users no matter where they are located in the world.

### Summary of the Invention

There may be a need for a communication system providing a proper performance.

This need may be met by a mobile communication terminal, by a communication station, by a communication network, and by a communication method according to the independent claims. Further embodiments of the present invention are described by the dependent claims.

According to an exemplary embodiment, a mobile communication terminal (such as a cellular phone) adapted to be communicatively (for instance in a wireless manner) coupled to a communication station (such as a base station) of a communication network (such as an UMTS network) is provided, the mobile communication terminal comprising a station communication unit (such as an antenna) adapted for exchanging communication messages with the communication station, an inspection unit (which may have processor capabilities) adapted for inspecting whether a predetermined threshold condition indicative of a communication parameter (such as present radio conditions) is fulfilled for a present communication link between the mobile communication terminal and the communication station, and a communication message generation unit (which may have processor capabilities) adapted for generating a communication message (which may be or which may be part of a PRACH preamble) for transmission to the communication station by the station communication unit, wherein the generated communication message is indicative of a desired communication mode (or of a desired communication protocol) for a subsequent communication (for instance an actual data transfer) between the mobile communication terminal and the communication station, which communication mode (for instance which resources shall be used during a random access procedure) is selected in accordance with a result of the inspection.

According to another exemplary embodiment, a communication station (such as a base station, for instance a node B) is provided which is adapted to be communicatively coupled (for instance for a wireless communication) to a mobile communication terminal of a communication network, wherein the communication station comprises a terminal communication unit (such as an antenna) adapted for exchanging communication messages with the mobile communication terminal, a communication message evaluation unit (which may have processor capabilities) adapted for evaluating a communication message received from the mobile communication terminal indicative of a desired communication mode for subsequent communication between the mobile communication terminal and the communication station, which communication mode is selected by the mobile communication terminal in accordance with a result of an inspection whether a predetermined threshold condition indicative of a communication parameter is fulfilled for a present communication link between the mobile communication terminal and the communication station, and a resource allocation unit (which may have processor capabilities) adapted for allocating resources regarding communication between the communication station and the mobile communication terminal in the communication network in accordance with a result of the evaluation.

According to still another exemplary embodiment, a communication network (for instance a radio network, particularly a UMTS network) is provided, the communication network comprising a mobile communication terminal having the above mentioned features and a communication station having the above mentioned features, wherein the mobile communication terminal is communicatively coupled to the communication station.

According to yet another exemplary embodiment, a method of communicating in a communication network is provided, the communication method comprising communicatively coupling a mobile communication terminal to a communication station, inspecting, by the mobile communication terminal, whether a predetermined threshold condition indicative of a communication parameter is fulfilled for a present communication link between the mobile communication terminal and the communication station, transmitting a communication message from the mobile communication terminal to the communication station, wherein the generated communication message is indicative of a desired communication mode for subsequent communication between the mobile communication terminal and the communication station, which communication mode is selected in accordance with a result of the inspecting, and allocating, by the communication station, resources regarding the communication in the communication network in accordance with the desired communication mode selected by the mobile communication unit.

According to still another exemplary embodiment of the invention, a program element (for instance a software routine, in source code or in executable code) is provided, which, when being executed by a processor, is adapted to control or carry out at least a part of a communication method having the above mentioned features.

According to yet another exemplary embodiment of the invention, a computer-readable medium (for instance a CD, a USB stick, a floppy disk or a harddisk) is provided, in which a computer program is stored which, when being executed by a processor, is adapted to control or carry out at least a part of a communication method having the above mentioned features.

Data processing for communication purposes which may be performed according to embodiments of the invention can be realized by a computer program, that is by software, or by using one or more special electronic optimization circuits, that is in hardware, or in hybrid form, that is by means of software components and hardware components.

In the context of this application, the term "mobile communication terminal" may particularly denote any user equipment, particularly portable communication device. This term may particularly include mobile phones, personal digital assistants (PDAs), navigation systems, etc.

The term "communication station" may particularly denote any base station of a radio network. It may be coupled with one or a plurality of mobile communication terminals. Such a communication station may particularly be a base station (BS) in the context of UMTS (Universal Mobile Telecommunication Systems). Such a base station may be a central radio transmitter/receiver that may maintain communication with mobile radio telephones within a given range. The communication station may be installed at a fixed position.

The term "communication unit" may particularly denote a transmitter, a receiver or a transmitter/receiver (transceiver) which allows for a unidirectional or bidirectional exchange of communication messages with a communication partner. Such a communication unit may particularly be a wireless communication unit, i.e. a communication system which communicates without the necessity of wires. However, wire-based communication is also covered by embodiments of the invention.

The term "threshold condition" may particularly denote one or several quantitative parameters which may predefined, and which may characterize a specific value of a communication parameter. Above and below such a communication parameter, different communication modes, for instance different types of resources for data transmission, may be selected.

The term "communication parameter" may particularly denote any parameter which has an impact on the communication scheme between the mobile communication terminal and the communication station. For instance, such a communication parameter may be a parameter characterizing the strength of an electromagnetic communication field, a relevance or a priority of a specific data message to be transmitted, an amount of data required for transmitting a specific message, etc.

The term "communication link" may particularly denote an actual or present communication connection allowing for a communication, i.e. the exchange of communication messages, between the mobile communication terminal and the communication station.

The term "communication mode" may particularly denote a format or a protocol or an operation mode according to which a communication between the mobile communication terminal and the communication station is performed. This may include a specific data format which has to be synchronized between the communication partners so that the communication messages are properly encodable or interpretable by communication entities.

The term "resource allocation" may particularly denote a management of communication (particularly transmission) resources, contingents or capabilities of a communication station which have to be distributed so as to allow simultaneous communication between the base station and several mobile communication terminals. Thus, a resource allocation decision may be denoted as a plan or schedule for using available resources, especially in the near term, to achieve the goal of an efficient communication management.

According to an exemplary embodiment of the invention, during a communication of a mobile communication terminal and a communication station, the actual value of a measured or otherwise determined communication parameter in comparison to a previously defined threshold condition may be taken as a basis for a decision of the mobile communication terminal which communication mode might be appropriate for the subsequent communication between the two communication partner devices. Thus, in accordance with a result of such a comparison, the mobile communication terminal suggests a specific communication mode and transmits the proposed communication mode in a specific portion of a communication message to the connected communication station. The communication station then receives this request (for instance as a preamble of a subsequent data packet) from the mobile communication terminal and may allocate the resources under consideration of this proposal. By taking this measure, a very efficient resource management in a communication network is made possible, rendering the distribution of the communication resources very efficient.

Particularly, access slot and signature selection may be performed based on threshold conditions according to an exemplary embodiment of the invention.

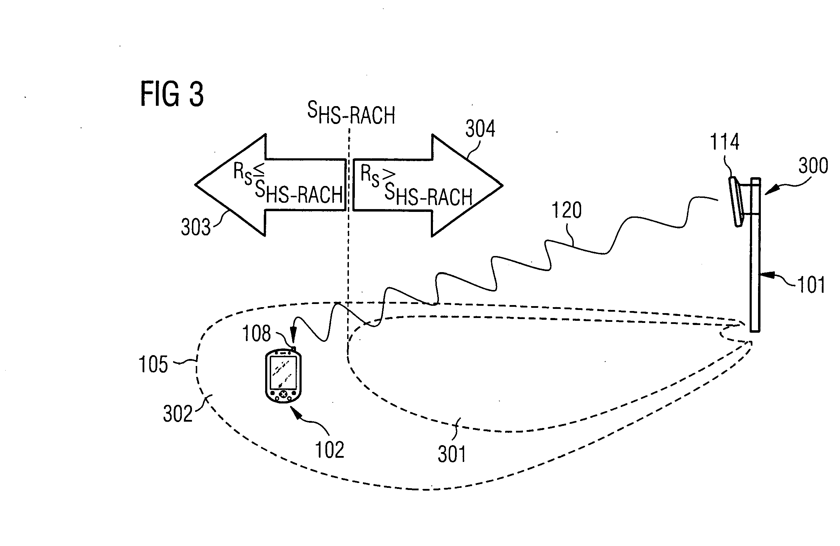

According to an exemplary embodiment of the invention, a threshold condition may be proposed for a UE as a means to decide, which access slots and/or signatures to use for a PRACH preamble (step 2 in Fig. 3). The selected access slots and/or signatures used by the UE signal a Node B this condition and allows the Node B to improve or optimise resource allocation. More specifically, the threshold condition can be based on parameters such as radio conditions, UL traffic volume, highest priority of the priority queue with UL data, UE capability, etc.

For a fast E-DCH allocation after a random access procedure, specific HS-RACH access slots and/or signatures for REL99 to 7 random access and HS-RACH random access may be used. However, it may be advantageous to provide means to the UE to decide whether HS-RACH or E-DCH resources are feasible given its radio conditions, UL traffic volume, priority of its UL traffic, etc., and select access slots and/or signatures accordingly. Based on the select access slots and/or signatures selected by the UE, the Node B can directly deduce which resource suites a UE well when granting it (for instance in step 3 of Fig. 3).

For instance, it may be determined whether HS-RACH is feasible under the UE's currently measured radio conditions. In an exemplary scenario, HS-RACH shall be used to allocate E-DCH resources to the UE. Hereby, the UE may be connected to a single cell (serving cell) only. After granting resources to the UE (in step 3 of Fig. 3), UTRAN may have no information about the UE location in the cell and its current radio conditions. A UE at the cell edge may face bad UL radio conditions. In CELL_DCH, this can be compensated by using a set of active E-DCH cells, to which the UE is connected, and which each can individually receive and acknowledge the reception of the UE data. In HS-RACH, a UE is connected to a single cell only, therefore more UL transmit power may be required for UEs at cell edge in comparison to a soft handover in CELL_DCH. This may not be desirable under certain frame conditions, so the operator may wish to restrict HS-RACH usage to UEs which face sufficiently good UL radio conditions, i.e. UEs sufficiently close to the base station.

According to an exemplary embodiment of the invention, a threshold condition (S_{HS-RACH}) may be introduced. The threshold may be provided via system information. If the threshold condition S_{HS-RACH} is fulfilled, then the UE is allowed to use resources (A) during a random process procedure. If threshold condition S_{HS-RACH} is not fulfilled, then the UE may be allowed to use resources (B) during the random process procedure. The usable resources (A) and (B) for random access as well as their relationship with the threshold condition may be provided by system information.

According to an exemplary embodiment of the invention, such a concept may be restricted to measurement threshold(s): A threshold condition (S_{HS-RACH}) for measurement evaluation may be introduced. The threshold may be provided as system information. The UE may monitor and evaluate a measurement quantity (R_{S}). If the monitored and evaluated quantity R_{S} is less or equal the threshold S_{HS-RACH}, then the UE may be allowed to use resources (A) during the random process procedure. If the monitored and evaluated quantity Rs is greater the threshold S_{HS-RACH}, then the UE may be allowed to use resources (B) during the random process procedure. The usable resources (A) and (B) for random access as well as their relationship with the threshold condition may be provided by system information. Multiple thresholds can be used for higher granularity on resources used during random access.

According to an exemplary embodiment of the invention, the use of specific access slots and/or signatures for the PRACH preamble may be allowed only when a specific condition is (or specific conditions are) fulfilled. The relationship between access slots and/or signatures and the condition(s) which have to be fulfilled may be provided by system information.

According to an exemplary embodiment of the invention, the use of specific access slots and/or signatures for the PRACH preamble may be allowed only when a specific measurement condition is (or specific measurement conditions are) fulfilled. The relationship between access slots and/or signatures and the measurement condition(s) which have to be fulfilled may be provided by system information.

More specifically, according to exemplary embodiments of the invention, thresholds can be used to signal to the Node B via the selected ASs/signatures:
- whether to use HS-RACH or the REL99 random access procedure
- whether to use HS-RACH with 2ms or 10 ms TTI
- whether a high or low UL data volume is pending.

In the following, further exemplary embodiments of the mobile communication terminal will be explained. However, these embodiments also apply to the communication station, to the communication network and to the method.

The inspection unit may further be adapted for inspecting whether a predetermined threshold condition is fulfilled indicative of a communication parameter of the group consisting of a measured strength of a communication field at a position of the mobile communication terminal (for example an amplitude of an electromagnetic communication field at the position at which the mobile communication terminal is presently located), a traffic in a communication field linking the mobile communication unit and the communication station (particularly an amount of data to be presently exchanged via one or more communication channels of such a communication field), an amount of data of a communication message to be sent by the mobile communication terminal (that is to say a size of a data packet to be transmitted via a communication message which may have an impact on the number of free channels or slots used for transmitting such a data packet), a capability of the mobile communication terminal (for instance which transmission formats the mobile communication terminal supports), and a priority level of a communication message to be sent by the mobile communication terminal (for example whether a message to be sent is classified to be more important or less important). One or a combination of these or other parameters may be used as a criteria for deciding which transmission protocol is appropriate in a specific case.

The communication message generation unit may be adapted for generating a communication message indicative of a transmission using first resources when the result of the inspection is that the predetermined threshold condition is fulfilled. The communication message generation unit may further be adapted for generating a communication message indicative of a transmission using second resources when the result of the inspection.is that the predetermined threshold condition is not fulfilled. Thus, different resources or communication transmission scenarios may be selected or proposed in accordance with the fact whether the threshold value is exceeded or not.

The communication message generation unit may be adapted for generating the communication message indicative of a desired communication mode specifying at least one of the group consisting of whether to use a high speed random access procedure or a REL99 (i.e. Release 99 which is a 3G specification for UMTS, particularly specifying UTRAN and MMS) random access procedure (that is to say use a later or former generation of a data transmission), whether to use a high speed random access procedure with a first transmission time interval or a second transmission time interval (wherein the first transmission time interval (TTI) may be different from the second transmission time interval (TTI)), whether to use a high speed random access procedure with a transmission time interval (TTI) of 2 ms or a transmission time interval (TTI) of 10 ms, and whether to use a first uplink data volume or a second uplink data volume (wherein the first uplink data volume may be different from the second uplink data volume). Therefore, these or other parameters may be adjusted based on a result of the evaluation.

The predetermined threshold condition may be provided by a system information block (SIB). Thus, it may be specified in a SIB which value the threshold condition should have. The system information elements may be broadcast in a system information block or in system information blocks. A system information block may group together system information elements of the same nature. Different system information blocks,may have different characteristics, for instance regarding their repetition rate and the requirements of user equipments to read the system information.

The mobile communication terminal may be adapted as a user equipment, particularly as a mobile phone. A mobile phone may be denoted as a device which behaves as a normal telephone while being able to move over a wide area. Mobile phones may allow connections to be made to the telephone network, normally bidirectionally dialling the other party's number on an in-built keypad. A mobile phone may also be denoted as a cellular telephone or a handheld mobile radio telephone for use in an area divided into sections, each with its own short range transmitter/receiver.

The mobile communication terminal and/or the communication station may be adapted for a communication in accordance with UMTS, particularly with UTRAN (UMTS Terrestrial Radio Access Network). UTRAN may be denoted as a hierarchical network of several radio network subsystems (RMS), which may be interconnected to one another and with a core network.

The communication station may be adapted for sending/returning a communication message to the mobile communication terminal in accordance with the desired communication mode. Therefore, after having allocated the resources upon receipt of the initializing communication message including the result of the comparison with the threshold value, the communication station may perform the communication with the coupled mobile communication terminal in accordance with the desired communication mode. This may consider properly the needs and requirements of the mobile communication terminal under the present conditions.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered to be disclosed within this application.

The aspects and exemplary embodiments defined above and further aspects of the invention are apparent from the example of embodiment to be described hereinafter and are explained with reference to these examples of embodiment.

### Brief Description of the Drawings

Fig. 1 schematically shows a communication system according to an exemplary embodiment of the invention.
Fig. 2 schematically shows a High Speed Random Access Channel (HS-RACH) procedure according to an exemplary embodiment of the invention.
Fig. 3 schematically shows an exemplary embodiment of the invention regarding a threshold determination whether use of HS-RACH is feasible.

### Detailed Description

The illustration in the drawings is schematic. It is noted that in different figures, similar or identical elements are provided with the similar or identical reference signs.

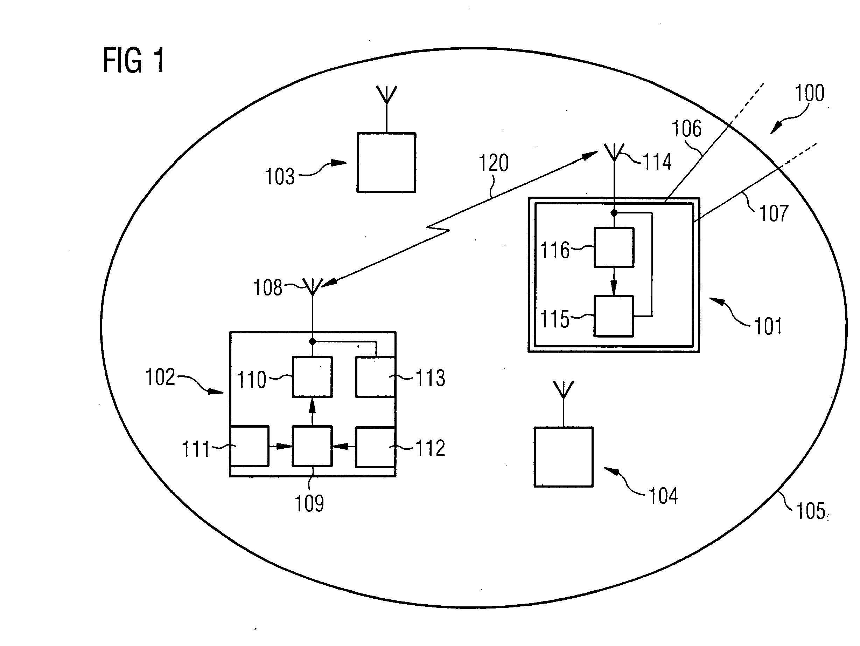

In the following, referring to **Fig. 1****,** a radio network 100 according to an exemplary embodiment of the invention will be explained.

The radio network 100 comprises a communication station 101 which may also be denoted as a base station (BS). The radio network 101 may comprise a single communication station 101, or may comprise a plurality of isolated or interconnected communication stations 101 (however only one is shown in Fig. 1). As indicated schematically by reference numerals 106, 107, the communication station 101 may optionally be coupled to a central station and/or to one or more further communication stations by means of communication paths 106, 107, which may be wired, wireless or fibre optical connections.

Furthermore, an operating distance 105 is shown schematically in Fig. 1, i.e. a range within which a communication between the communication station 101 and a plurality of mobile communication terminals 102 to 104 such as mobile phones is enabled with sufficient data transmission quality.

In the following, only the communicative coupling (indicated schematically by reference numeral 120) between the communication station 101 and the mobile communication terminal 102 according to an exemplary embodiment of the invention will be explained in detail. For the sake of simplicity, the construction and the operation of the mobile communication terminals 103, 104 will not be described in detail.

The mobile communication terminal 102 is adapted to be communicatively coupled to the communication station 101 of the communication network 100 and comprises a station communication unit 108 such as a receiver and transmitter (transceiver) antenna adapted for bidirectionally exchanging communication messages with the communication station 101 in a wireless manner. In other words, the mobile communication terminal 102 may receive communication messages from the communication station 101, and may transmit communication messages to the communication station 101. For instance, such communication messages may include configuration information for configuring the communicative coupling between the entities 101, 102, and/or may include speech information for transmitting speech information indicative of a mobile telephone conversation between a user of the mobile communication terminal 101 and another user of another cellular phone.

The mobile communication terminal 102 comprises an inspection unit 109 adapted for inspecting whether or not a predetermined threshold condition indicative of a communication parameter (for instance related to a quality of a communicative connection between entities 101, 103) is fulfilled for a present communication link 120 between the mobile communication terminal 102 and the communication station 101. To provide data as a basis for such a comparison, a detection unit 111 is provided which detects one or more parameters in the environment of the mobile communication terminal 102, for instance a strength of a communication signal at a position of the mobile communication terminal 102 enabling the communicative connection 120. A correspondingly measured value may be supplied from the detection unit 111 which may also be denoted as a measurement unit to the inspection unit 109. Furthermore, from a database 112 which may be memory such as an EEPROM, the inspection unit 109 may be supplied with the threshold value regarding a target strength or a reference strength of the communication signal. The inspection unit 109 may then quantitatively compare the signals provided by the units 111, 112 to determine whether the present value of the signal strength exceeds the threshold value, or not.

The result of such a comparison may be supplied from the inspection unit 109 to a communication message generation unit 110. The communication message generation unit 110 may be adapted for generating a communication message for transmission to the communication station 101 via the station communication unit 108, wherein the generated communication message may be indicative of a desired communication mode for subsequent communication between the mobile communication terminal 102 and the communication station 101, which communication mode is selected in accordance with a result of the inspection. Thus, the communication message generation unit 110 determines which protocol, format, or operation mode would be proper for the mobile communication terminal 102 in view of the present value of the communication parameters such as the actual field strength. Such an information can be sent as a part of a preamble of a communication message from the mobile communication terminal 102 to the communication station 101 to allow the latter to properly allocate resources in accordance with the requirements of the mobile communication terminal 102.

Furthermore, Fig. 1 shows an input/output unit 113 which may also be denoted as the user interface unit. Via such a user interface unit 113, a user may bidirectionally communicate with the mobile communication terminal 102. Thus, the input/output unit 113 may comprise a keypad, buttons, etc., and/or may include a display on which results of a communication may be displayed. The input/output unit 113 may serve, together with further components which are not shown in Fig. 1, to allow to use the mobile communication terminal 102 as a mobile phone or cellular phone.

The generated communication message may be transmitted from the mobile communication terminal 102 to the communication station 101 via the wireless communication link 120. A communication message evaluation unit 116 of the communication station 101 may receive the communication message via a terminal communication unit 114 adapted for transmitting communication messages to or for receiving communication messages from the mobile communication terminal 102. The communication message evaluation unit 116 may evaluate such an initializing communication message which is indicative of a desired communication mode for subsequent communication between the mobile communication terminal 102 and the communication station 101. The proposed communication mode has been selected by the communication terminal 102 in accordance with a result of the previously performed inspection. In accordance with such a result, a resource allocation unit 115 of the communication station 101 capable of managing communication resources of the network 100 and allocates resources regarding communication in the communication network 100 in accordance with the result of the evaluation. In other words, the resource allocation unit 115 distributes resources in the network 100 to achieve proper or optimum accordance with the needs and wishes of the individual mobile communication terminals 102 to 104.

When returning a communication message from the communication station 101 to the mobile communication terminal 102, this return communication message sent in response to the received communication message may be in accordance with the desired communication mode, or may indicate the mobile communication terminal 102 which protocol or format of data communication has to be used for the following communication procedure.

More specific, the communication message generation unit 110 of the mobile communication terminal 102 specifies access slots and signatures for a preamble of a communication message which is sent to the communication station 101. This portion of the communication message is then indicative of whether or not a high speed random access procedure or a Release 99 random access procedure shall be used for the following communication. Therefore, it may be reliably ensured that a chosen communication mode is in proper accordance with the present communication characteristics between the communication terminal 101 and the mobile communication terminal 102.

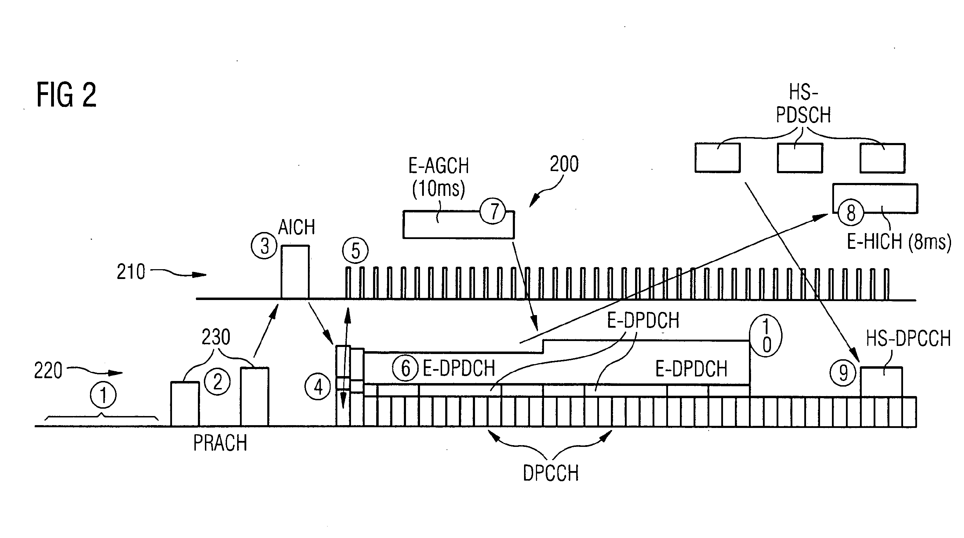

The station communication unit 108 may be adapted for sending a communication message to the communication station 102 using a Physical Random Access Channel (PRACH). A random access channel Random Access Channel (RACH) may be used in mobile phones 102 or other wireless device when it needs to get the attention of a base station 101 in order to initially synchronize its transmission with the base station 101. A PRACH exists in the uplink path and allows the user equipment to send messages to an UTRAN for requesting communication resources (see Fig. 2).

Particularly in the context of the usage of E-DCH as RACH shared channel and a collision detection for a random access procedure, it may be advantageous to create a base for high speed and high data rate random access, further on called herein "High Speed Random Access Channel" (HS-RACH). It is believed that techniques of HSUPA, such as fast inner loop power control, varying bitrate, Node B scheduling with grants, fast ACK/NACK for DL transmission can be used already in the random access phase.

In the following, referring to **Fig. 2****,** a communication scheme 200 according to an exemplary embodiment of the invention will be explained. In the communication scheme 200, a downlink portion 210 is distinguished from an uplink portion 220. A high speed preamble in the uplink portion 220 is denoted with reference numeral 230 in Fig. 2.

The described HS-RACH concept may be decomposed in several steps or phases, which are outlined below and which are indicated as well in Fig. 2:
(1) Determination of UL interference level for open loop power control
(2) Release 99 random access procedure with power ramp-up using specific HS-RACH access slots and/or signatures indicated in SIB
(3) Access Grant and Resource Assignment
(4) Start of inner loop power control in UL, for instance on DPCCH.
(5) Start of inner loop power control in DL, for instance on F-DPCH.
(6) Start of UL data transmission, for instance on E-DPDCH/E-DPCCH
(7) subsequent Resource Assignment (update of existing resource assignment) and Collision detection and resolution
(8) ACK/NACK of UL data (ffs), for instance on E-HICH
(9) ACK/NACK of DL data (ffs) and CQI for link adaptation (ffs), for instance on HS-DPCCH
(10) Mechanisms at end of data transmission, end of HS-RACH resource allocation period, collision detection, etc.

In the following, several examples for implementations of exemplary embodiments of the invention will be explained.

### Example 1 (threshold whether use of HS-RACH is feasible)

In FDD UMTS, the P-CPICH may be used as reference channel for measurement. When the UE camps on a cell, it can perform RSCP, Ec/No or pathloss measurements. Via system information, a set of RACH preamble sequences (A) may be reserved for HS-RACH. If the UE uses these RACH preamble sequences in PRACH preamble, then it may indicate to the Node B that it is running the random access procedure for HS-RACH and expects (E-DCH) resources allocated according to the HS-RACH procedure (above steps 3 to 10).

Via system information, a set of RACH preamble sequences (B) may be reserved for REL99 random access. If the UE uses these RACH preamble sequences in PRACH preamble, then it may indicate to the Node B that it is running the random access procedure as specified in REL99, and expects resources granted accordingly. A threshold S_{HS-RACH} may be provided by system information. If for instance the measured Reference Signal Received Power (R_{S}) is higher then the threshold value S_{HS-RACH}, then the UL radio conditions for this UE may be estimated to be good enough that HS-RACH can be applied. If this condition is fulfilled and if the UE wants to have E-DCH resources allocated with a resource grant, then it may have to use RACH preamble sequences from (A). Otherwise it may use the RACH preambles for (B). In this example the threshold limits the use of HS-RACH to UEs in closer vicinity to the Node B. Cell edge UE may be restricted to REL99 random access only.

In the following, referring to **Fig. 3****,** a corresponding communication system 300 which is similar to the communication system 100 shown in Fig. 1 will be explained in more detail.

As can be taken from Fig. 3, the communication range 105 is divided into a near field communication range 301 and a far field communication range 302. At a border between the near field communication range 301 and the far field communication range 302, the threshold condition (R_{S} = S_{HS-RACH}) is exactly fulfilled. As is indicated schematically by an arrow 303, a random access may be restricted to resources (A), when the threshold condition is not fulfilled (R_{S} ≤ S_{HS-RACH}). In a range indicated by an arrow 304, in which the threshold condition is exceeded (R_{S} ≥ S_{HS-RACH}) random access is restricted to resources (B).

### Example 2 (threshold whether use of HS-RACH with 2ms TTIs is feasible)

Via system information, a set of RACH preamble sequences (A) may be linked with 2ms TTI resource allocation in the HS-RACH. If the UE uses these RACH preamble sequences in PRACH preamble, then it indicates to the Node B that E-DCH resources with 2ms TTI length can be allocated (in'the above step 3). Via system information, a set of RACH preamble sequences (B) is reserved for HS-RACH with EDCH resource allocation on the basis of 10 ms TTIs. If the UE uses these RACH preamble sequences in PRACH preamble, then it may indicate to the Node B that its current radio conditions do indicate that the use of 2ms TTI is not recommendable. A threshold S_{HS-RACH} may be provided by system information. If for instance the Reference Signal Received Power is higher then the threshold value S_{HS-RACH}, then the UL radio conditions for this UE are estimated to be good enough that E-DCH resource allocation with 2ms TTIs can be granted by the Node B. If this condition is fulfilled, then is may have to use RACH preamble sequences from (A). Otherwise it may use the RACH preambles for (B). In this example the selected RACH preamble sequences inform the Node B if EDCH resources with 2ms TTIs can be applied. The threshold value may act as reference to allow the UE to decide which RACH preambles it should use.

### Example 3 (threshold indicating current UL traffic volume)

Via system information, a set of RACH preamble sequences (A) may be restricted to UEs, which have more than n bits in their UL buffer to transmit. If the UE uses these RACH preamble sequences in PRACH preamble, then it signals to the Node B a higher data volume transmission demand. Via system information, a set of RACH preamble sequences (B) may be restricted to UEs, which have less or equal than n bits in their UL buffer to transmit. The threshold S_{HS-RACH} is set to n. n may be set by the operator in such a way that the UE can transmit all uplink data in one TTI period (= single MAC-e PDU for UL transmission). The Node B can take this under consideration when dynamically granting resources to the Node B.

### Example 4 (threshold indicating priority of the UL data)

Via system information, a set of RACH preamble sequences (A) may be restricted to UEs, which have UL data in priority queues with priority higher than n. If the UE uses these RACH preamble sequences in PRACH preamble, then it may signal to the Node B the need to be served with high priority. Via system information, a set of RACH preamble sequences (B) may be restricted to UEs, which data in priority queues with priority of less or equal than n to transmit. The threshold S_{HS-RACH} may be set to n. The threshold can be exploited by the Node B to serve UEs with high priority first. This may be useful, if the (HS-)RACH resources are limited.

Alternatively, the RACH preamble sequences in (A) may be linked with HS-RACH, and those in (B) with Release 99 to 7 random access. In this case, low priority services may be restricted to a "slow" random access method.

In the following, a procedural description according to an exemplary embodiment of the invention will be explained.

A condition for starting the random access procedure may be given, for instance UL data is pending or the UE has been paged.

The UE may select the access slots and signatures depending on which threshold condition(s) are fulfilled. The threshold condition(s) and the access slots and/or signatures to be used may be provided by system information. After selection access slot and signature, the UE may send a PRACH preamble (power setting, etc. may be as in Release 99).

The Node B may detects a PRACH preamble with HS-RACH signature sequence at an access slot instance. Depending on the access slots number and depending on the used RACH signature sequence, the Node B may determine the format, in which the response is returned. If the access slot and preamble are linked with
- a Release 99 random access then the response is sent on the AICH.
- a HS-RACH assess, the access grant has to be configured as agreed for HS-RACH (for instance modified AICH, or HS-SCCH).
- high data volume pending for UL transmission in the UE, the Node B may grant high UL resources.
   The UE may monitor for an access grant. Hereby it expects the access grant in a format associated with the access slot number and signature is used for the previous PRACH preamble.
- If the UE receives a resource grant, then it acts accordingly.
- If the UE receives a NACK, then it stops the PRACH preamble cycle.
- If the UE receives no response, the it continues with the PRACH preamble cycle.

The steps following a resource grant (starting from the above steps 4) may be carried out in a conventional manner.

Finally, it should be noted that the above-mentioned embodiments illustrate rather then limit the invention, and that those skilled in the art will be capable of designing many alternative embodiments without departing from the scope of the invention as defined by the appended claims. In the claims, any reference signs shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of reference signs and abbreviations:

- 100: radio network
- 101: communication station
- 102: mobile communication terminal
- 103: mobile communication terminal
- 104: mobile communication terminal
- 105: operating distance
- 106: communication path
- 107: communication path
- 108: terminal communication unit
- 109: inspection unit
- 110: communication message generation unit
- 111: detection unit
- 112: database
- 113: user interface
- 114: station communication unit
- 115: resource allocation unit
- 116: communication message evaluation unit
- 120: communicative coupling
- 200: communication scheme
- 210: downlink portion
- 220: uplink portion
- 230: high speed preamble
- 300: communication network
- 301: near field communication range
- 302: far field communication range
- 303: range below threshold value
- 304: range above threshold value
- ACK: acknowledged
- CQI: Channel Quality Indicator
- DPCCH: Dedicated Physical Control Channel
- DPDCH: Dedicated Physical Data Channel
- DL: downlink
- E-DCH: Enhanced Dedicated Channel
- E-DPCCH: Enhanced Dedicated Physical Control Channel
- E-DPDCH: Enhanced Dedicated Physical Data Channel
- FDD: Frequency Division Duplex
- NACK: non-acknowledged
- HS-RACH: High Speed Random Access Channel
- HS-SCCH: High Speed - Shared Control Channel
- HSDPA: High Speed Downlink Packet Access
- HSUPA: High Speed Uplink Packet Access
- P-CPICH: Primary - Common Pilot Channel
- PRACH: Physical Random Access Channel
- RACH: Random Access Channel
- SIB: System Information Block
- TTI: Transmission Time Interval
- UE: User Equipment
- UL: uplink

## Claims

1. A mobile communication terminal (102) adapted to be communicatively coupled to a communication station (101) of a communication network (100), the mobile communication terminal (102) comprising:
a station communication unit (108) adapted for exchanging communication messages with the communication station (101);
an inspection unit (109) adapted for inspecting whether a predetermined threshold condition indicative of a communication parameter is fulfilled for a present communication link between the mobile communication terminal (102) and the communication station (101); and
a communication message generation unit (110) adapted for generating a communication message for transmission to the communication station (101) by the station communication unit (108), wherein the generated communication message is indicative of a desired communication mode for a subsequent communication between the mobile communication terminal (102) and the communication station (101), which communication mode is selected in accordance with a result of the inspection.

2. The mobile communication terminal (102) according to claim 1,
adapted to be communicatively coupled to a communication station (101) according to any one of claims 11 to 15.

3. The mobile communication terminal (102) according to claim 1 or 2,
wherein the communication parameter comprises at least one of the group consisting of a measured strength of a communication field at a position of the mobile communication terminal (102), a traffic in a communication field linking the mobile station communication unit (108) and the communication station (101), a traffic in an uplink direction to the communication station (101), an amount of data of a communication message to be sent by the mobile communication terminal (102), a capability of the mobile communication terminal (102), and a priority level of a communication message to be sent by the mobile communication terminal (102).

4. The mobile communication terminal (102) according to any one of claims 1 to 3,
wherein the communication message generation unit (110) is adapted for generating the communication message indicative of a desired communication mode specifying at least one of the group consisting of at least one access slot, and at least one signature for a preamble of a communication message.

5. The mobile communication terminal (102) according to any one of claims 1 to 4,
wherein the station communication unit (108) is adapted for sending a communication message to the communication station (101) using a Physical Random Access Channel.

6. The mobile communication terminal (102) according to any one of claims 1 to 5,
wherein the communication message generation unit (110) is adapted for generating a communication message indicative of a transmission using first resources when the result of the inspection is that the predetermined threshold condition is fulfilled, and is adapted for generating a communication message indicative of a transmission using second resources when the result of the inspection is that the predetermined threshold condition is not fulfilled.

7. The mobile communication terminal (102) according to any one of claims 1 to 6,
wherein the communication message generation unit (110) is adapted for generating the communication message indicative of a desired communication mode specifying at least one of the group consisting of whether to use a high speed random access procedure or a Release 99 random access procedure, whether to use a high speed random access procedure with a first transmission time interval or a second transmission time interval, whether to use a high speed random access procedure with a transmission time interval of 2 ms or a transmission time interval of 10 ms, whether to use a first uplink data volume or a second uplink data volume, and which of different random access types are used for communication.

8. The mobile communication terminal (102) according to any one of claims 1 to 7,
wherein the predetermined threshold condition is provided by a system information block.

9. The mobile communication terminal (102) according to any one of claims 1 to 8,
adapted as a user equipment, particularly as a mobile phone.

10. The mobile communication terminal (102) according to any one of claims 1 to 9,
adapted for a communication in accordance with a Universal Mobile Telecommunications System protocol, particularly in accordance with a Universal Mobile Telecommunications System Terrestrial Radio Access Network protocol.

11. A communication station (101) adapted to be communicatively coupled to a mobile communication terminal (102) of a communication network (100), the communication station (101) comprising:
a terminal communication unit (114) adapted for exchanging communication messages with the mobile communication terminal (102);
a communication message evaluation unit (116) adapted for evaluating a communication message received from the mobile communication terminal (102) indicative of a desired communication mode for subsequent communication between the mobile communication terminal (102) and the communication station (101), which communication mode is selected by the mobile communication terminal (102) in accordance with a result of an inspection whether a predetermined threshold condition indicative of a communication parameter is fulfilled for a present communication link between the mobile communication terminal (102) and the communication station (101); and
a resource allocation unit (115) adapted for allocating resources regarding communication between the communication station (101) and the mobile communication terminal (102) in the communication network (100) in accordance with a result of the evaluation.

12. The communication station (101) according to claim 11, adapted to be communicatively coupled to a mobile communication terminal (102) according to any one of claims 1 to 10.

13. The communication station (101) according to claim 11 or 12,
wherein the terminal communication unit (114) is adapted for returning a communication message to the mobile communication terminal (102) in accordance with the desired communication mode.

14. The communication station (101) according to any one of claims 11 to 13,
adapted for a communication in accordance with a Universal Mobile Telecommunications System protocol, particularly in accordance with a Universal Mobile Telecommunications System Terrestrial Radio Access Network protocol.

15. The communication station (101) according to any one of claims 11 to 14,
wherein the resource allocation unit (115) is adapted for allocating resources regarding communication between the communication station (101) and a plurality of mobile communication terminals (102) in the communication network (100).

16. A communication network (100), the communication network (100) comprising
a mobile communication terminal (102) according to any one of claims 1 to 10;
a communication station (101) according to any one of claims 11 to 15;
wherein the mobile communication terminal (102) is communicatively coupled to the communication station (101).

17. A method of communicating in a communication network (100), the method comprising
communicatively coupling a mobile communication terminal (102) to a communication station (101);
inspecting, by the mobile communication terminal (102), whether a predetermined threshold condition indicative of a communication parameter is fulfilled for a present communication link between the mobile communication terminal (102) and the communication station (101);
transmitting a communication message from the mobile communication terminal (102) to the communication station (101), wherein the generated communication message is indicative of a desired communication mode for subsequent communication between the mobile communication terminal (102) and the communication station (101), which communication mode is selected in accordance with a result of the inspecting;
allocating, by the communication station (101), resources regarding the communication in the communication network (100) in accordance with the desired communication mode selected by the mobile station communication unit (108).
